(19) Europäisches Patentamt
European Patent Office
Office européen des brevets

(11) Numéro de publication: **0 112 257**
**B1**

(12) **FASCICULE DE BREVET EUROPÉEN**

(45) Date de publication du fascicule du brevet: **08.04.87**

(51) Int. Cl.⁴: **G 01 L 1/18**, H 01 C 10/10

(21) Numéro de dépôt: **83402464.8**

(22) Date de dépôt: **19.12.83**

(54) **Jauge piézorésistive et son procédé de fabrication.**

(30) Priorité: **21.12.82 FR 8221445**

(43) Date de publication de la demande: **27.06.84 Bulletin 84/26**

(45) Mention de la délivrance du brevet: **08.04.87 Bulletin 87/15**

(84) Etats contractants désignés: **CH DE GB LI**

(56) Documents cité:
**EP-A-0 065 419**

**SOLID STATE COMMUNICATIONS, volume 28, no. 1, octobre 1978 (OXFORD, GB) S. BOUFFARD et al. "Elastoresistivity of TTV-TCNQ and related compounds", pages 113-117**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Canet, Roland, Residence Les Genêts 30, rue Delestraint, F-33310 Lormont (FR)**
Inventeur: **Delhaes, Pierre, 3, Allée de Moulerens, F-33170 Gradignan (FR)**
Inventeur: **Dupart, Eliane, 25, Chemin de Peyre, F-33410 Cestas (FR)**
Inventeur: **Manceau, Jean- Pierre, Rue Gémin, F-33210 Preignac (FR)**
Inventeur: **Pacault, Adolphe, Domaine Universitaire, F-33405 Talence (FR)**
Inventeur: **Pascal, Claude, Allée de la Pinède, F-33610 Cestas (FR)**

(74) Mandataire: **Mongrédien, André, c/o BREVATOME 25, rue de Ponthieu, F-75008 Paris (FR)**

EP 0 112 257 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention a pour objet une jauge piézorésistive et son procédé de fabrication.

De façon plus précise, elle se rapporte à des jauges piézorésistives dont l'élément sensible est constitué par un composé organique conducteur, ces jauges étant utilisables pour la mesure de pressions de l'ordre de 500 bars à 10 kbars.

On connaît des jauges piézorésistives comportant un élément de carbone piézorésistif maintenu entre deux conducteurs de cuivre. Cependant de telles jauges ont l'inconvénient de ne pas présenter une sensibilité suffisante pour la mesure des pressions allant de 500 bars à quelques kbars et d'être par ailleurs influencées par la température.

La présente invention a précisément pour objet une jauge piézorésistive qui pallie les inconvénients précites.

La jauge piézorésistive, selon l'invention, comprend un élément piézorésistif et elle se caractérise en ce que ledit élément piézorésistif est constitué par un composé organique conducteur de l'électricité choisi dans le groupe comprenant les sels de tétraméthyltétrathiofulvalène, les sels d'ammonium quaternaire du tétracyanoquinodiméthane et le diéthyldiméthyltétrathiofulvalène-tétracyanoquinodiméthane (DEDMTTF-TCNQ).

De préférence, l'élément piézorésistif est constitué par une couche mince dudit composé organique conducteur de l'électricité, déposée sur un support isolant, par exemple en quartz ou en verre. Toutefois, dans certains cas, l'élément piézorésistif peut être formé par un monocristal du composé organique conducteur de l'électricité.

On peut aussi utiliser un élément piézorésistif constitué par un mélange de poudre fine compactée du composé organique conducteur de l'électricité, disposé sur un support isolant.

Les composés organiques conducteurs de l'électricité utilisés dans l'invention sont décrits dans: Annales de Physique, 1976, tome 1, n° 4-5, p. 145-256 et dans Journal de Chimie Physique, 1982, 79, n°4.

Parmi les cristaux organiques, il existe une classe particulière de composés dans lesquels le phénomène de transfert de charge joue un rôle essentiel. Ces systèmes stables sont formés par l'association en solution de deux molécules dont, l'une, A, agit comme accepteur d'électrons et, l'autre, D, comme donneur d'électrons. On peut représenter cette réaction de la façon suivante:

$mA + nD \rightarrow A_m^{-\rho} D_n^{+\rho}$

m et n représentant les nombres respectifs de molécules et ρ le taux de transfert de charge correspondant à la proportion d'électrons transférés. Si m = n, on a une stoechiométrie simple, et si m est ≠ de n, on a une stoechiométrie complexe.

Si ρ est sensiblement égal à 0, le complexe est un complexe moléculaire à état fondamental neutre.

Si ρ est égal à 1, c'est un vrai composé ionique avec une charge électrique par molécule D ou A, et si ρ est inférieur à 1, il y a moins de charges électriques que de molécules présentes. On a ainsi un composé à valence mixte, condition nécessaire pour obtenir un conducteur organique: on peut alors distinguer:

1°) les vrais complexes à transfert de charge dans lesquels il y a transfert d'un électron du donneur à l'accepteur. Ces électrons célibataires se trouvent alors sur des orbitales π (complexe π - π); et

2°) les sels d'ions radicalaires dans lesquels un seul des ions est radicalaire, le contre-ion étant diamagnétique.

Leur préparation peut se faire par réaction d'oxydation directe ou par réaction de double échange à partir de sels ioniques diamagnétiques.

Selon l'invention, le composé organique conducteur de l'électricité est un sel de tétraméthyltétrathiofulvalène tel que le bromure ou le sulfocyanure de tétraméthyltétrathiofulvalène, un sel d'ammonium quaternaire du tétracyanoquinodiméthane comme le tétracyanoquinodiméthane-N-méthylphénazinium (NMP-TCNQ) ou le diéthyldiméthyltétrathiofulvalène-tétracyanoquinodiméthane.

Ainsi, selon l'invention, l'élément piézorésistif est un complexe à transfert de charge: diéthyldiméthyltétrathiofulvalène-tétracyanoquinodiméthane (DEDMTTF-TCNQ) ou un sel d'ion radical, soit anion radical du TCNQ (sels d'ammonium quaternaire tels que les sels de quinolinium, d'acridinium, de phénazinium et de bipyridillium), soit cation radical du TMTTF (sels d'halogénures ou de pseudohalogénures $BF_4^-$, $ClO_4^-$, $SCN^-$, $NO_3^-$,...).

On précise que le tétracyanoquinodiméthane répond à la formule:

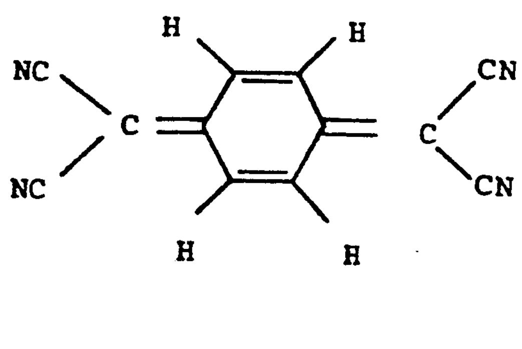

et que le tétraméthyltétrathiofulvalène répond à la formule:

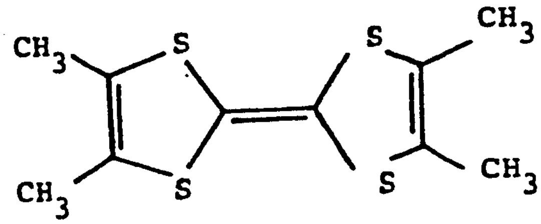

Selon l'invention, l'élément piézorésistif peut être constitué par un complexe à transfert de charge tel que diéthyldiméthyl-tétrathiofulvalène-tétracyanoquinodiméthane (DEDMTTF-TCNQ) ou par un sel d'ion radical soit anion radical du TCNQ (sels d'ammonium quaternaire tels les sels de quinolinium, d'acridinium, de phénazinium et de bipyridillium), soit cation radical des TTF ou TSF ($R_1R_2R_3R_4$), sels d'halogénures ou de pseudohalogénures $BF^-_4$, $ClO^-_4$, $SCN^-$, $NO^-_3$,...).

De préférence, selon l'invention, le composé organique constituant l'élément piézorésistif est le diéthyldiméthyl tétrathiofulvalène-tétracyanoquinodiméthane (DEDM TTF-TCNQ), le bromure de tétraméthyltétrathiofulvalène ($(TMTTF)_2Br$), le sulfocyanure de tétraméthyltétrathiofulvalène ($(TMTTF)_2SCN$), ou le tétracyanoquinodiméthane N-méthyl phénazinium (NMP-TCNQ).

Selon l'invention, l'élément piézorésistif de la jauge est de préférence protégé par une plaquette isolante, par exemple en mica, reliée au support par un joint d'étanchéité, qui peut être formé de résine époxyde telle qu'une araldite, ou d'un autre polymère. La présence de cette plaquette et de ce joint permet de protéger l'élément piézorésistif contre la corrosion et d'éviter ainsi sa détérioration.

L'invention a également pour objet un procédé de préparation d'une jauge piézorésistive répondant aux caracteristiques precitées. Ce procédé comprend les étapes suivantes:

a) déposer sur certaines parties d'un support isolant un matériau conducteur de l'électricité de façon à former sur ledit support deux paires de contacts électriques, et

b) déposer ensuite sur le support isolant ainsi traité, une couche mince du composé organique conducteur de l'électricité recouvrant en partie les contacts électriques ainsi déposés.

Avantageusement, on réalise le dépôt de la couche mince de composé organique par évaporation sous vide. Ce mode de dépôt ne peut être utilisé que dans les cas des composés pour lesquels il est possible de trouver des conditions de dépôt correspondant à une sublimation sans décomposition thermique du composé.

Généralement, on réalise ce dépôt de façon à obtenir des couches de 5000 à 8000 Å d'épaisseur, ce qui correspond à une résistance de quelques kiloohms.

Le support isolant est généralement un support amorphe constitué par un disque de verre ou de quartz. Cependant, on peut aussi utiliser des supports cristallins, par exemple en bromure de potassium ou en mica et choisir ainsi une structure cristalline du support proche de celle du composé organique pour obtenir un dépôt épitaxial.

On peut encore utiliser des supports souples réalisés par exemple en polymère.

Selon le procédé de l'invention, on commence par déposer sur certaines parties du support isolant un matériau conducteur de l'électricité, constitué par un métal noble tel que le cuivre, l'argent, le platine, l'or et leurs alliages, par exemple un alliage orargent, afin de former sur le support deux paires de contacts électriques constituant les bornes de sortie et d'entrée de la jauge, qui seront utilisées, d'une part, pour l'alimentation en courant électrique de la jauge et, d'autre part, pour le branchement d'un dispositif de mesure tel qu'un voltmètre. Ce dépôt peut être réalisé par transport actif en phase vapeur ou par évaporation sous vide en utilisant un masque de forme appropriée pour obtenir la géométrie souhaitée.

Ainsi, on peut utiliser la même enceinte de dépôt pour réaliser consécutivement le dépôt par évaporation sous vide de la couche mince de composé organique conducteur de l'électricité. Dans les deux cas, on choisit la température d'évaporation en fonction du matériau, de la pression, de la température du support, de la distance entre le support et le creuset d'évaporation et de la nature du support de façon à contrôler la vitesse de dépôt et la qualité des couches minces obtenues.

Lorsque l'on réalise le dépôt des contacts électriques et le dépôt de la couche mince de composé organique, par évaporation sous vide, on peut utiliser, pour réaliser successivement ces deux opérations, un sublimateur comprenant une cloche en verre placée au-dessus d'un ensemble à vide dont les pompes primaire et secondaire permettent d'atteindre un vide de $10^{-6}$ torr environ.

Selon l'invention, on peut aussi réaliser la jauge piézorésistive à partir d'une poudre finement broyée du composé organique conducteur de l'électricité.

Dans ce cas, on utilise de préférence un support isolant souple réalisé par exemple en polymère commercialisé sous la marque Kapton, et on mélange la poudre finement broyée à une poudre de matériau isolant qui constituera une matrice isolante, en proportions appropriées.

Après avoir disposé le mélange sur le support, on compacte la poudre et on obtient ainsi une couche d'environ 1/10$^{e}$ de mm d'épaisseur et de 10 mm de longueur, puis on forme les connexions électriques.

Une jauge de ce type présente en particulier l'avantage de posséder une résistance intrinsèque plus faible que celle des jauges dont l'élément piézorésistif est une couche mince. Elle peut être utilisée en particulier comme jauge de contrainte.

D'autres caractéristiques et avantages de l'invention apparaîtront mieux à la lecture de la description qui suit donnée bien entendu à titre illustratif et non limitatif en référence au dessin annexé sur lequel:

- la figure 1 représente schématiquement en perspective une jauge piézorésistive selon l'invention, et
- les figures 2 et 3 sont des courbes représentant les variations de résistance de jauges selon l'invention en fonction de la pression appliquée.

Sur la figure 1, on voit que la jauge comprend un support isolant 1 en verre recouvert localement de deux paires de contacts électriques constitués par des bandes 3 de matériau conducteur de l'électricité et d'une couche mince 5 d'un composé organique conducteur de l'électricité constituant l'élément piézorésistif de la jauge. Cette couche mince 5 recouvre seulement en partie les bandes de matériau conducteur 3 de façon à pouvoir relier la jauge à un circuit extérieur. La couche 5 est protégée contre les chocs et la corrosion par une feuille de mica 6, l'étanchéité étant réalisée par un joint 8 de résine époxyde telle que l'araldite.

Cette jauge peut être réalisée de la façon suivante. On dépose par évaporation sous vide, sur le support isolant 1 en verre, quatre bandes 3 de matériau conducteur de l'électricité, par exemple d'or ou d'alliage orargent, en utilisant un masque. On recouvre ensuite le support 1 comportant les bandes 3 de la couche mince 5 de composé organique conducteur de l'électricité, également par évaporation sous vide, en utilisant un masque afin de laisser libres les extrémités des bandes 3 déposées précédemment. Après cette opération, on forme des connexions électriques sur les extrémités des bandes 3 par microsoudure de fils d'argent 7 et 9 et l'on recouvre la couche mince 5 d'une feuille de mica 6 puis on réalise le joint d'étanchéité 8 au moyen de résine époxyde que l'on laisse durcir.

On obtient ainsi une jauge piézorésistive dont la première paire de contacts 3 espacés l'un de l'autre de la distance $d_1$ peut être reliée par les fils 7 à une alimentation de courant stabilisée d'une intensité de l'ordre de 50 $\mu$A, et la deuxième paire de contacts 3 espacés l'un de l'autre de la distance $d_2$, peut être reliée par les fils 9 à un voltmètre électronique pour enregistrer les variations de tension aux bornes de la jauge.

Les exemples suivants illustrent la réalisation de trois jauges selon l'invention.

**Exemple 1**

Dans cet exemple, on utilise un élément piézorésistif constitué de bromure de tétraméthyltétrathiofulvalène $(TMTTF)_2Br$.

On synthétise tout d'abord la molécule de tétraméthyltétrathiofulvalène à partir des thiones correspondants par un procédé classique tel que celui cité dans l'article paru au Journal de Chimie Physique (1982).

On dépose ensuite sur un support en verre de 22 mm de longueur et de 10 mm de largeur recouvert préalablement de 4 bandes d'or (3) espacées de façon telle que $d_1$ = 10 mm et $d_2$ = 15 mm, une couche mince de ce composé ayant 3 mm de largeur et 10 mm de longueur, sous une pression de $10^{-5}$ torr, à une température de 115 à 130°C en maintenant le substrat à une température de 20°C, celui-ci étant à une distance allant de 4 à 5 cm du creuset d'évaporation contenant le bromure de tétraméthyltétrathiofulvalène.

On obtient ainsi une couche de $(TMTTF)_2Br$ de 0,5-0,7 $\mu$m d'epaisseur.

En utilisant du $(TMTTF)_2$-SCN au lieu de $(TMTTF)_2Br$, on obtient dans les mêmes conditions une couche mince similaire de $(TMTTF)_2$-SCN.

On forme ensuite les connexions électriques 7 et 9 par microsoudure de fils d'argent, on recouvre la couche mince d'une feuille de mica de 0,03 mm d'épaisseur et on réalise l'étanchéité par mise en place d'un joint d'araldite.

On contrôle ensuite les propriétés de la jauge ainsi obtenue en la soumettant à des essais de pression en régime statique.

Pour ces essais, on soumet la jauge piézorésistive à une pression hydrostatique en la disposant dans une enceinte remplie d'huile dont on fait varier la pression au moyen d'une presse hydraulique. On mesure les variations de résistance de la jauge en fonction de la pression appliquée. A titre de comparaison, on effectue la même mesure dans la même enceinte sur une jauge en carbone du commerce.

Les résultats obtenus sont donnés sur la figure 2 sur laquelle la courbe I représente les variations de la résistance $\frac{\Delta R}{R_0}$ (en %) de la jauge en fonction de la pression appliquée (en kbar) lors de la compression et la courbe II en tirets représente les variations $\frac{\Delta R}{R_0}$ en fonction de la pression lors de la décompression. $R_0$ représente la résistance initiale de la jauge avant l'essai.

On remarque ainsi que la jauge présente un léger phénomène d'hystérésis qui cependant n'est pas gênant puisque de telles jauges ne sont généralement pas réutilisées.

Sur cette figure, la courbe III représente les résultats obtenus avec la jauge du commerce.

Ainsi, l'examen des courbes indique clairement que l'on obtient une meilleure sensibilité avec la jauge de l'invention.

**Exemple 2**

On réalise une jauge identique à celle de l'exemple 1, mais en utilisant pour la fabrication de l'élément piézorésistif du N-méthylphénazinium-tétracyanoquinodiméthane (NMP-TCNQ). On synthétise tout d'abord la molécule de NMP-TCNQ à partir de tétracyanoquinodiméthane at de N-méthylphénazine en utilisant une réaction classique d'oxydoréduction.

On dépose ensuite le composé ainsi obtenu sur un support identique à celui de l'exemple 1, par évaporation sous vide, dans les conditions suivantes:

- pression: $10^{-5}$ torr
- température de dépôt: 20° C
- température du creuset: 100° C
- distance entre le support et le creuset de NMP-TCNQ : 4-5 cm.

On obtient ainsi une couche mince de 0,5-0,7 µm d'épaisseur. On forme ensuite, comme dans l'exemple 1, les connexions électriques puis on recouvre d'une feuille de mica et on forme le joint d'araldite. On vérifie alors les propriétés de la jauge ainsi obtenue en la soumettant au même essai de pression en régime statique.

Les résultats obtenus sont donnés sur la figure 2, sur laquelle la courbe IV représente les variations de la resistance $\frac{\Delta R}{R_0}$ (%) en fonction de la pression appliquée lors de la compression et la courbe V (en tirets) représente les variations $\frac{\Delta R}{R_0}$ en fonction de la pression, lors de la décompression.

De même que précédemment, on observe un effet d'hystérésis, mais les résultats obtenus confirment également la sensibilité supérieure des jauges de l'invention.

**Exemple 3**

On réalise une jauge identique à celle de l'exemple 1, mais en utilisant pour la fabrication de l'élément piézorésistif du diéthyldiméthyltétrathiofulvalène-tétracyanoquinodiméthane (DEDMTTF-TCNQ). On synthétise tout d'abord la molécule de DEDMTTF-TCNQ à partir de tétracyanoquinodiméthane et de diéthyldiméthyltétrathiofulvalène en utilisant la réaction de complexation classique.

On dépose ensuite le composé ainsi obtenu sur un support identique à celui de l'exemple 1, par évaporation sous vide, dans les conditions suivantes:

- pression: $10^{-5}$ torr
- température de dépôt: 20° C
- température du creuset: 80-100° C
- distance entre le support et le creuset de DEDMTTF-TCMQ: 4 à 20 cm.

On obtient ainsi une couche mince de 0,5-0,7 µm d'épaisseur. On forme ensuite, comme dans l'exemple 1, les connexions électriques, puis on recouvre la couche mince d'une feuille de mica et on forme le joint d'araldite. On vérifie ensuite les propriétés de la jauge ainsi obtenue en la soumettant aux mêmes essais de pression en régime statique. Les résultats obtenus sont donnés sur la figure 3, sur laquelle la courbe VI représente les variations de la résistance $\frac{\Delta R}{R_0}$ (%) en fonction de la pression appliquée lors de la compression et la courbe VII (en tirets) represente des variations $\frac{\Delta R}{R_0}$ lors de la décompression.

Les résultats obtenus confirment la sensibilité supérieure de la jauge de l'invention. Par ailleurs, on remarque que l'effet d'hystérésis est beaucoup plus faible qu'avec les composés utilisés dans les exemples 1 et 2.

**Revendications**

1. Jauge piézorésistive comprenant un élément piézorésistif (5) caractérisée en ce que ledit élément (5) est constitué par un composé organique conducteur de l'électricité choisi dans le groupe comprenant les sels de tétraméthyltétrathiofulvalène, les sels d'ammonium quaternaire du tétracyanoquinodiméthane et le diéthyldiméthyltétrathiofulvalène-tétracyanoquinodiméthane dit DEDMTTF-TCNQ.

2. Jauge piézorésistive selon la revendication 1, caractérisée en ce que ledit élément piézorésistif (5) est constitué par une couche mince du composé organique conducteur de l'électricité, déposé sur un support isolant (1).

3. Jauge piézorésistive selon la revendication 1, caractérisée en ce que ledit élément piézorésistif (5) est constitué par un mélange de poudre fine compactée du composé organique conducteur de l'électricité disposé sur un support isolant.

4. Jauge piézorésistive selon la revendication 2, caractérisée en ce que le support isolant (1) est en quartz ou en verre.

5. Jauge piézorésistive selon la revendication 1, caractérisée en ce que le sel de tétraméthyltétrathiofulvalène est le bromure ou le sulfocyanure. de tétraméthyltétrathiofulvalène.

6. Jauge piézorésistive selon la revendication 1, caractérisée en ce que le sel d'ammonium quaternaire du tétracyanoquinodiméthane est le tétracyancquinodiméthane-N-méthylphénazinium dit NMP-TCNQ.

7. Jauge piézorésistive selon l'une quelconque des revendications 1 à 6, caractérisée en ce que ledit élément piézorésistif est protégé par une plaquette isolante (6) reliée au support par un joint d'étanchéité (8).

8. Jauge piézorésistive selon la revendication 7, caractérisée en ce que le joint d'étanchéité est en résine époxyde.

9. Procédé de préparation d'une jauge piézorésistive selon l'une quelconque des revendications 1, 2 et 4 à 8, caractérisé en ce qu'il comprend les étapes suivantes:

a) - déposer sur certaines parties d'un support isolant (1) un matériau conducteur de l'électricité de façon à former sur ledit support deux paires de contacts électriques (3), et

b) - déposer ensuite sur le support isolant ainsi traité, une couche mince (5) d'un composé organique conducteur de l'électricité choisi dans le groupe comprenant les sels de tétraméthyltétrathiofulvalène, les sels d'ammonium quaternaire du tétracyanoquinodiméthane et le diéthyldiméthyltétrathiofulvalène-tétracyanoquinodiméthane, dit DEDMTTF-TCNQ recouvrant en partie conducteur de l'électricité recouvrant en partie les contacts électriques (3) ainsi déposés.

10. Procédé selon la revendication 9, caractérisé en ce que l'on dépose la couche mince (5) dudit composé organique par évaporation sous vide ou par transport actif en phase vapeur.

11. Procédé selon l'une quelconque des revendications 9 et 10, caractérisé en ce que l'on recouvre ensuite le support ainsi revêtu d'une plaquette isolante (6) et en ce que l'on forme un joint d'étanchéité (8) entre le support et la plaquette.

12. Procédé selon la revendication 11, caractérisé en ce que le joint d'étanchéité est en résine époxyde ou en un autre polymère.

13. Procédé selon l'une quelconque des revendications 9 à 12, caractérisé en ce que le matériau conducteur de l'électricité est un métal choisi dans le groupe comprenant le cuivre, l'argent, le platine, l'or et leurs alliages.

**Patentansprüche**

1. Piezoresistiver Meßkörper, enthaltend ein piezoresistives Element (5), dadurch gekennzeichnet, daß das genannte Element (5) von einer elektrisch leitenden organischen Verbindung gebildet ist, die aus der Gruppe ausgewählt ist, die Tetramethyltetrathiofulvalen-Salze, die quaternären Tetracyanchinondimethan-Ammoniumsalze und Diäthyldimethyltetrathiofulvalen-tetracyanchinondimethan, genannt DEDMTTF-TCNQ, enthält.

2. Piezoresistiver Meßkörper nach Anspruch 1, dadurch gekennzeichnet, daß das genannte piezoresistive Element (5) von der dünnen Schicht der elektrisch leitfähigen organischen Verbindung gebildet ist, die auf einem isolierenden Träger (1) angeordnet ist.

3. Piezoresistiver Meßkörper nach Anspruch 1, dadurch gekennzeichnet, daß das genannte piezoresistive Element (5) von einer verdichteten feinen Pulvermischung der elektrisch leitfähigen organischen Verbindung gebildet ist, die auf einem isolierenden Träger angeordnet ist.

4. Piezoresistiver Meßkörper nach Anspruch 2, dadurch gekennzeichnet, daß der isolierende Tröger (1) aus Quarz oder Glas besteht.

5. Piezoresistiver Meßkörper nach Anspruch 1, dadurch gekennzeichnet, daß das Tetramethyltetrathiofulvalen-Salz das Bromid oder das Sulfocyanid von Tetramethyltetrathiofulvalen ist.

6. Piezoresistiver Meßkörper nach Anspruch 1, dadurch gekennzeichnet, daß das quaternäre Tetracyanchinondimethan-Ammoniumsalz Tetracyanchinondimethan-N-methylphenazin, genannt NMP-TCNQ, ist.

7. Piezoresistiver Meßkörper nach einem der Ansprüche 1 bis 6, dadurch gekennzeichnet, daß das genannte piezoresistive Element von einem isolierenden Plättchen (6) geschützt ist, das an dem Träger durch eine Abdichtungsverbindung (8) befestigt ist.

8. Piezoresistiver Meßkörper nach Anspruch 7, dadurch gekennzeichnet, daß die Abdichtungsverbindung aus Epoxyharz besteht.

9. Verfahren zum Herstellen eines piezoresistiven Meßkörpers nach einem der Ansprüche 1, 2 und 4 bis 8, dadurch gekennzeichnet, daß es die folgenden Stufen enthält:

a) Aufbringen auf gewisse Abschnitte eines isolierenden Trägers (1) eines elektrisch leitfähigen Materials, um auf dem genannten Träger zwei Paare elektrischer Kontakte (3) auszubilden, und

b) anschließendes Aufbringen auf dem so behandelten Träger einer dünnen Schicht (5) einer elektrisch leitfähigen organischen Verbindung, die teilweise die so aufgebrachten elektrischen Kontakte (3) bedeckt und aus der Gruppe ausgewählt ist, die die Tetramethyltetrathiofulvalen-Salze, die quaternären Tetracyanchinondimethan-Ammoniumsalze und Diäthyldimethyltetrathiofulvalen-tetracyanchinondimethan, genannt DEDMTTF-TCNQ, enthält.

10. Verfahren nach Anspruch 9, dadurch gekennzeichnet, daß man die dünne Schicht (5) der genannten organischen Verbindung durch Vakuumaufdampfung oder durch aktiven Transport in Dampfphase aufbringt.

11. Verfahren nach einem der Ansprüche 9 und 10, dadurch gekennzeichnet, daß man anschließend den so bedeckten Träger mit einem isolierenden Plättchen (6) bedeckt und daß man eine Dichtungsverbindung (8) zwischen dem Träger und dem Plättchen ausbildet.

12. Verfahren nach Anspruch 11, dadurch gekennzeichnet, daß die Dichtungsverbindung aus Epoxyharz oder einem anderen Polymer besteht.

13. Verfahren nach einem der Ansprüche 9 bis 12, dadurch gekennzeichnet, daß das elektrisch leitfähige Material ein Metall ist, das aus der Gruppe ausgewählt ist, die Kupfer, Silber, Platin, Gold oder deren Legierungen enthält.

**Claims**

1. Piezoresistive gauge comprising a piezoresistive element (5), characterized in that the said element (5) consists of an electrically conductive organic compound chosen from the group comprising tetramethyltetrathiofulvalene salts, quaternary ammonium salts of tetracyanoquinodimethane and diethyldimethyltetrathiofulvalene-tetracyanoquinodimethane, known as DEDMTTF-TCNQ.

2. Piezoresistive gauge according to Claim 1, characterized in that the said piezoresistive element (5) consists of a thin layer of the electrically conductive organic compound deposited on an insulating support (1).

3. Piezoresistive gauge according to Claim 1, characterized in that the said piezoresistive element (5) consists of a mixture of compacted fine powder of the electrically conductive organic compound arranged on an insulating support.

4. Piezoresistive gauge according to Claim 2, characterized in that the insulating support (1) is made of quartz or of glass.

5. Piezoresistive gauge according to Claim 1, characterized in that the tetramethyltetrathiofulvalene salt is tetramethyltetrathiofulvalene bromide or sulphocyanide.

6. Piezoresistive gauge according to Claim 1, characterized in that the quaternary ammonium salt of tetracyanoquinodimethane is N-methylphenaziniumtetracyanoquinodimethane, known as NMP-TCNQ.

7. Piezoresistive gauge according to any one of Claims 1 to 6, characterized in that the said piezoresistive element is protected by an insulating wafer (6) connected to the support by means of a seal (8).

8. Piezoresistive gauge according to Claim 7, characterized in that the seal is made of epoxide resin.

9. Process for the preparation of a piezoresistive gauge according to any one of Claims 1, 2 and 4 to 8, characterized in that it comprises the following stages:

a) depositing an electrically conductive material on certain parts of an insulating support (1) so as to form two pairs of electrical contacts (3) on the said support, and

b) afterwards depositing on the insulating support treated in this manner a thin layer (5) of an electrically conductive organic compound chosen from the group comprising tetramethyltetrathiofulvalene salts, quaternary ammonium salts of tetracyanoquinodimethane and diethyldimethyltetrathiofulvalene-tetracyanoquinodimethane, known as DEDMTTF-TCNQ, partly overlapping the electrical contacts (3) deposited in this manner.

10. Process according to Claim 9, characterized in that the thin layer (5) of the said organic compound is deposited by evaporation under vacuum or by active transport in a vapour phase.

11. Process according to either of Claims 9 and 10, characterized in that the support coated in this manner 5 is next overlapped with an insulating wafer (6) and in that a seal (8) is formed between the support and the wafer.

12. Process according to Claim 11, characterized in that the seal is made of epoxide resin or of another polymer.

13. Process according to any one of Claims 9 to 12, characterized in that the electrically conductive material is a metal chosen from the group comprising copper, silver, platinum, gold and alloys thereof.

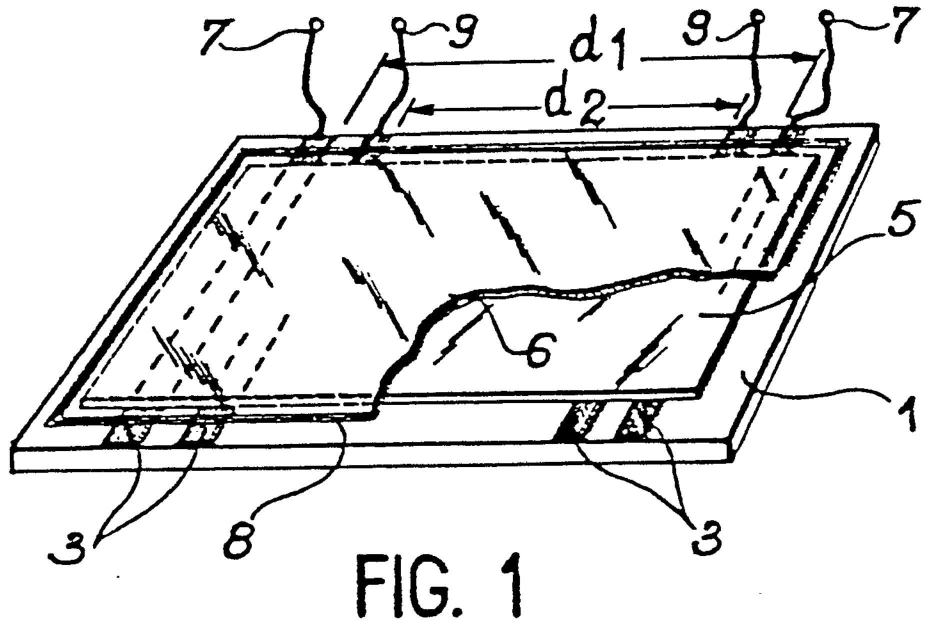
7
9
d1
9
7
d2
5
6
1
3
8
3

FIG. 1

FIG. 2

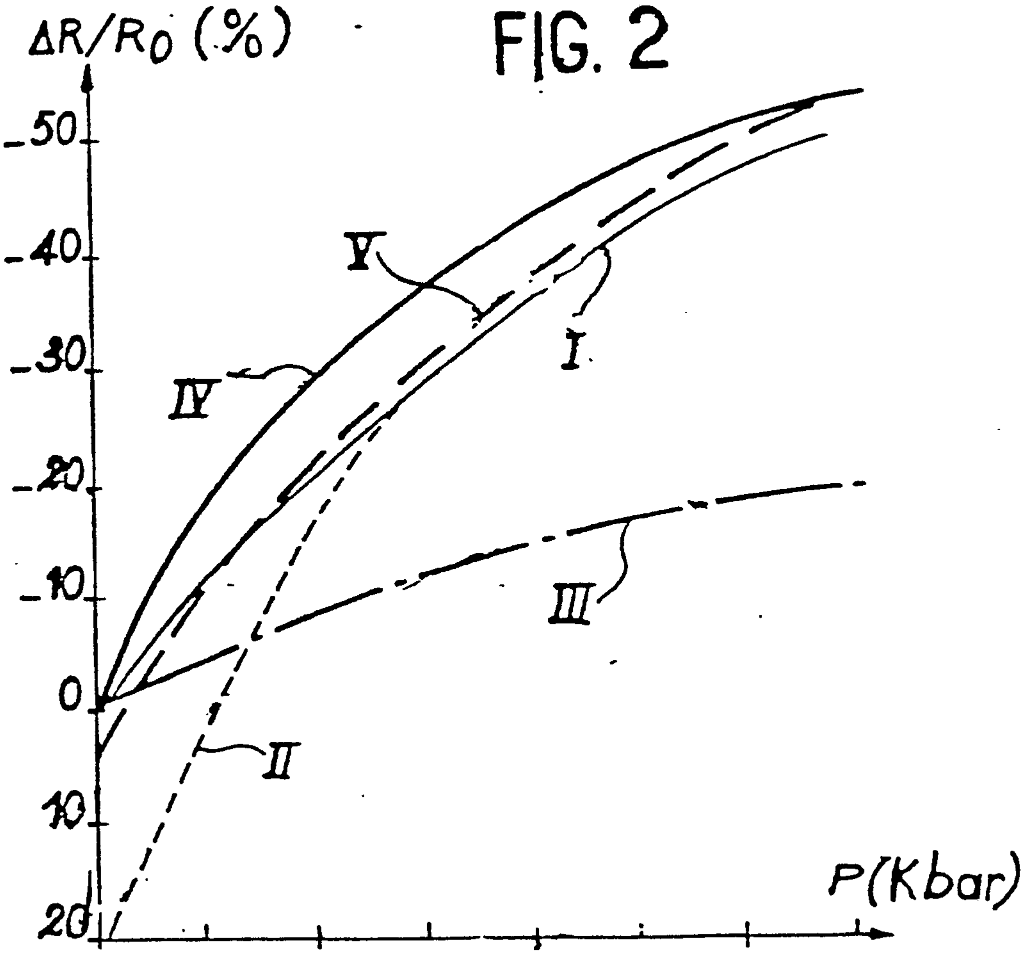
ΔR/R0 (%)
50
40
30
20
10
0
10
20
V
I
IV
III
II
P(Kbar)
0
1
2
3

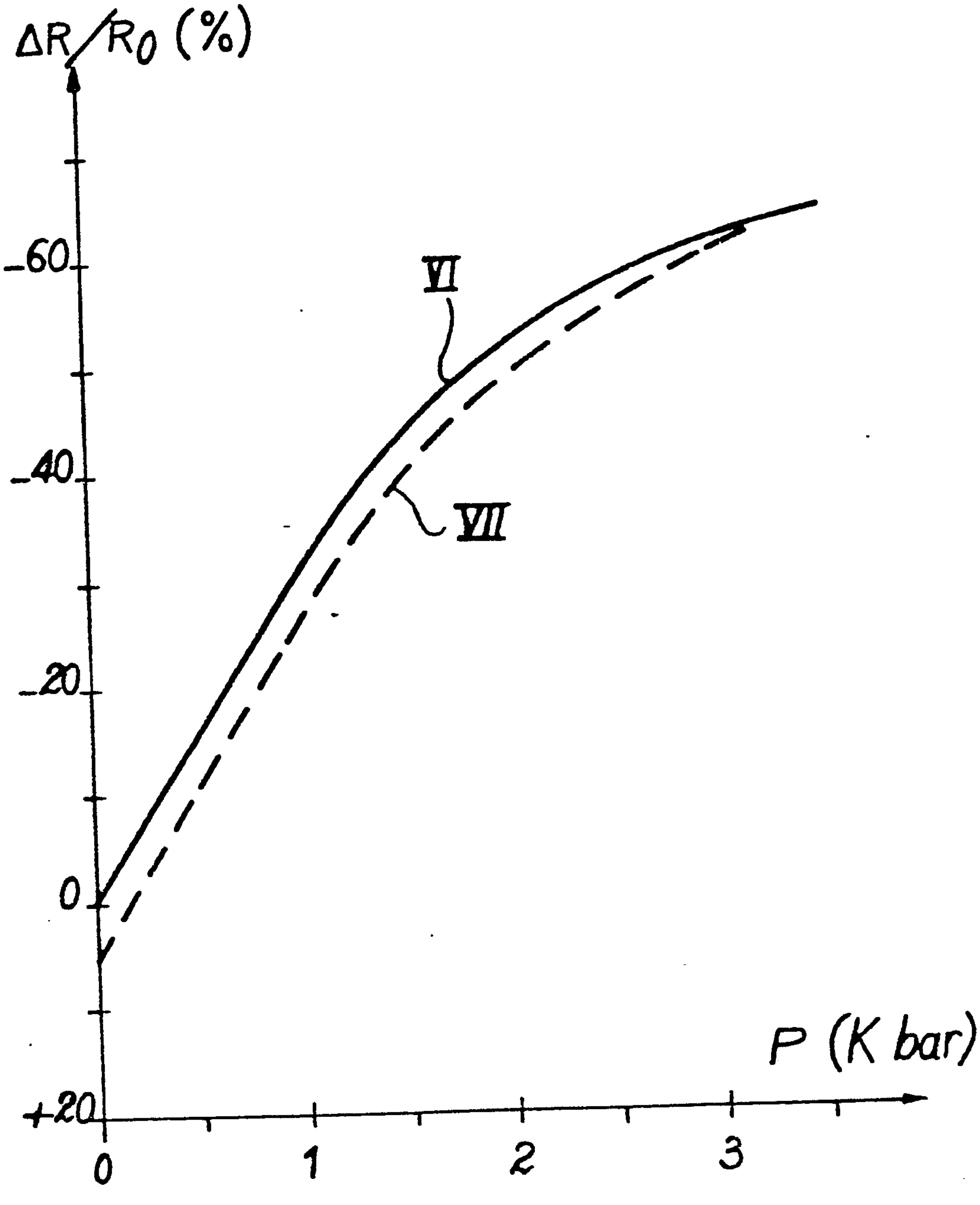


FIG. 3